# EUROPEAN PATENT APPLICATION

(11) **EP 1 306 011 A1**
(43) Date of publication of application: **02.05.2003**
(21) Application number: 01204144.8
(22) Date of filing: 29.10.2001
(51) Int. Cl.: A23G 3/02, A23G 3/20

(54) **Caramel mixture and method for manufacturing thereof**

(71) Applicant: Mars B.V., 5466 AE Veghel (NL)
(72) Inventor: Bosma-de-Boer, Margaretha Mirjam, 5251 ZC Vlijmen (NL); Holl, Wernerus Jozef, 5481 GK Schijndel (NL); Habers, Marcus Wilhelmus Hendrikus, 5464 PA Veghel (NL); Peters, Jasper Theodoor, 4835 NM Breda (NL)
(74) Representative: Vernout, Robert

(57) **Abstract**

Method for manufacturing an edible product, wherein caramel is manufactured which contains 50-85% by weight sugars or sugar replacers, 8-20% by weight fats and 7-18% by weight water, wherein egg white is whipped to an aerated foam, whereafter 1 part by weight of foamed egg white is mixed with 1-60 parts by weight of caramel at a temperature of 80-130°C such that an aerated caramel mixture is obtained.

## Description

The invention relates to a method for manufacturing an edible product which includes caramel. The caramel in this product contains 50-85% by weight sugars or sugar replacers (preferably 60-70% by weight sugars and preferably substantially glucose syrup), 8-20% by weight fats (preferably 10-16% by weight) and 5-18% by weight water (preferably 7-14% by weight). The caramel preferably further comprises 5-10% by weight milk powder.

Although the taste of caramel is generally appreciated, many people do not find the taste sensation of caramel optimal because it is perceived as being too sweet. Caramel is moreover a very sticky substance comparable to syrup, whereby many people do not appreciate caramel. When a product which incorporates caramel is consumed long threads are often formed due to this stickiness which can end up on the body or clothing. Particularly in the case of consumption by small children unhygienic situations can result. Furthermore caramel deforms, especially when heated, which generally limits the kinds of products which can be formed of it to products wherein the caramel is contained in another structure. A further disadvantage is that caramel is a heavy, filling substance, which is generally not consumed in large quantities.

The object of the invention is a tasty caramel product which is simple to produce and which is less sticky, which retains its form better, which has a better taste sensation, which has better digestive properties and/or which has a longer shelf-life.

According to the invention egg white is whipped to an aerated foam for this purpose, whereafter 1 part by weight of foamed egg white is mixed with 1-60 parts by weight of caramel (preferably 8-30 parts by weight of caramel) at a temperature of 80-130°C (preferably 100-120°C) such that an aerated caramel mixture is obtained. In the context of this invention the term "egg white" includes a re-hydrated egg white powder solution.

Owing to the foamed egg white, air bubbles are introduced into the caramel whereby the product has a good taste sensation, and whereby the caramel also loses the syrupy stickiness which is so characteristic and which is undesirable in the intended applications of the product. Owing to the high temperature of the caramel the egg white coagulates (solidifies) into a stable matrix, whereby the product retains its form and thereby has a long storage life. If the temperature of the caramel is too low, this coagulation does not take place, while if the temperature is too high the caramel or the egg white burns.

The egg white is preferably mixed with 10-30% by weight of water prior to whipping and there is preferably also then a wait of at least 10 hours (preferably at least 20 hours) before the egg white is whipped, during which period the egg white (partly) hydrates, whereby a better result is achieved. Furthermore, sugar syrup is preferably added to the egg white. Other additions to the egg white that improve stability may include gelatine and/or milk powder. A good aerated result is obtained if the egg white is whipped to form the foam with a density of 0.08-0.16 g/cm³ (more preferably 0.10-0.14 g/cm³).

The foamed egg white and the caramel are preferably mixed by being pressed together at a pressure of 1 - 15 Bar through a static mixer, for instance a Sulzer™ SMX mixer. Such a static mixer comprises a tube having therein a labyrinth of mixing elements through which the mixture is pressed by means of a pump, so that the ingredients are mixed in cautious manner, and whereby the aerated structure is retained. The egg white itself is preferably whipped until aerated in a so-called Mondo™ mixer, which consists of a vessel having therein a shaft rotating at high speed (roughly 1100 revolutions per minute) which is provided with radially extending pins.

The invention further relates to an edible product, comprising an aerated caramel mixture which is manufactured by means of the method according to the invention. In a first preferred embodiment the aerated caramel mixture is herein encased by a layer of chocolate or sugar. The product further preferably comprises a biscuit and/or one or more pieces of nougat, nuts, butter or ice-cream. In a second preferred embodiment the aerated caramel mixture encases a core with peppermint or liquorice extract. In a third preferred embodiment the aerated caramel mixture is encased by a product comprising liquorice extract (Dutch "drop"). In a fourth preferred embodiment the aerated caramel has the consistency of a spread, so that it may be used in a sandwich.

The invention furthermore relates to a container containing the aerated caramel mixture according to the invention, which can for instance serve as bread spread. In a particular preferred embodiment the container further comprises chocolate spread, wherein the caramel and the chocolate spread are distributed in the container in a manner comparable to the known product Duo Penotti® from the manufacturer Penotti.

The invention will now be further elucidated with reference to a preferred embodiment.

Placed in a vessel is a mixture of egg white, water and a small part sugar syrup. The mixture has a temperature of about 20°C and a total moisture content of about 40% (this is achieved by adding roughly 20% by weight water). The mixture is then left for 24 hours, during which period hydration of the egg white occurs, i.e. water molecules are bonded to the egg white molecules. The egg white mixture is subsequently whipped at a rotation speed of about 1100 rpm until a foamy mass is created with a density of about 0.12 g/cm³.

In addition, caramel with a total moisture content of about 11.6% by weight is maintained in a vessel at a temperature of roughly 105°C. The composition of the caramel is as follows:

| | |
|---|---|
| Sugar | 18.2% by weight |
| Glucose syrup | 57.0% by weight |
| Fat | 10.0% by weight |
| Skimmed milk powder | 8.2% by weight |
| Lactose | 1.0% by weight |
| Whey powder | 0.7% by weight |
| Milk fat | 3.1% by weight |
| Salt | 0.6% by weight |
| Water | 1.2% by weight |

The sugar in the caramel may be replaced by low calorie or non-cariogenic sugar replacers.

The liquid caramel is guided through a conduit to a static Sulzer SMX™ by means of a pump. Before the caramel is guided into the static mixer the prepared foamed egg white is added in a predetermined ratio. Practical tests have been carried out with ratios of foamed egg white/caramel lying between 1:4 and 1:40, and at all these ratios a stable and usable result was achieved. Stable is understood to mean that the aerated structure is also retained after a long period of time, and a usable result is understood to mean a caramel product which at least largely achieves the objectives stated in the introduction.

Owing to the pressure of said pump the ingredients are subsequently pressed through the static mixer, whereby the caramel and the foamed egg white are mixed together in controlled manner, wherein the aerated structure of the egg white is retained and is incorporated in the caramel. If a non-static mixer were to be used with for instance a high rotation speed, there would then be the danger of the aerated structure being destroyed.

When the caramel product reaches the end of the static mixer, expansion takes place, after which the product has a density between 0.3 and 1.3 g/cm³ and a temperature of about 95°C, at which temperature the egg white coagulates and a stable matrix structure forms in the caramel mixture. The product is now ready to be processed into products such as confectionery or biscuits. The product is per se also very suitable as for instance bread spread.

Although the invention is described above on the basis of an embodiment, it will be apparent to the skilled person that many variations are possible. The scope of the present invention should not therefore be limited by the details of this embodiment.

## Claims

1. Method for manufacturing an edible product, wherein caramel is manufactured which contains 50-85% by weight sugars or sugar replacers, 8-20% by weight fats and 7-18% by weight water, **characterized in that** egg white is whipped to an aerated foam, whereafter 1 part by weight of foamed egg white is mixed with 1-60 parts by weight of caramel at a temperature of 80-130°C such that an aerated caramel mixture is obtained.

2. Method as claimed in claim 1, **characterized in that** 1 part by weight of whipped foamed egg white is mixed with 8-30 parts by weight of caramel.

3. Method as claimed in claim 1 or 2, **characterized in that** the egg white is mixed with 10-30% by weight of water at least 10 hours prior to whipping.

4. Method as claimed in any of the foregoing claims 1-3, **characterized in that** sugar syrup is added to the egg white.

5. Method as claimed in any of the foregoing claims 1-4, **characterized in that** the egg white is whipped until the foam has a density of 0.08-0.16 g/cm³.

6. Method as claimed in any of the foregoing claims 1-5, **characterized in that** the caramel contains 60-70% by weight sugars or sugar replacers.

7. Method as claimed in any of the foregoing claims 1-6, **characterized in that** the sugars in the caramel substantially comprise glucose syrup.

8. Method as claimed in any of the foregoing claims 1-7, **characterized in that** the caramel further contains 5-10% by weight milk powder.

9. Method as claimed in any of the foregoing claims 1-8, **characterized in that** during mixing the caramel has a temperature of 100-120°C.

10. Method as claimed in any of the foregoing claims 1-9, **characterized in that** the foamed egg white and the caramel are mixed by being pressed together through a static mixer.

11. Edible product, comprising an aerated caramel mixture which is manufactured by means of the method as claimed in any of the foregoing claims 1-10.

12. Edible product as claimed in claim 11, **characterized in that** the aerated caramel mixture is encased by a layer of chocolate or sugar.

13. Edible product as claimed in claim 12, **characterized in that** it further comprises a biscuit.

14. Edible product as claimed in claim 11 or 12, **characterized in that** it further comprises one or more pieces of nougat, nuts, butter or ice-cream.

15. Edible product as claimed in claim 11, **characterized in that** the aerated caramel mixture encases a core with peppermint or liquorice extract.

16. Edible product as claimed in claim 11, **characterized in that** the aerated caramel mixture is encased by a product comprising liquorice extract.

17. Edible product as claimed in claim 11, wherein the aerated caramel has the consistency of a spread.

18. Container containing an aerated caramel mixture which is manufactured by means of the method as claimed in any of the foregoing claims 1-10.

19. Container as claimed in claim 17, **characterized in that** the container further contains chocolate spread.
